# FASCICULE DE BREVET EUROPEEN

(11) **EP 3 176 713 B1**
(45) Date de publication et mention de la délivrance du brevet: **09.01.2019**
(21) Numéro de dépôt: 16201723.0
(22) Date de dépôt: 01.12.2016
(51) Int. Cl.: G06F 17/50

(54) **PROCÉDÉ POUR ÉQUIPER DES REGISTRES D'UN CIRCUIT INTÉGRÉ POUR DÉTECTER DES VIOLATIONS TEMPORELLES**
VERFAHREN ZUM AUSSTATTEN DER REGISTER EINES INTEGRIERTEN SCHALTKREISES FÜR DIE DETEKTION VON TIMING-VERLETZUNGEN
METHOD FOR EQUIPPING REGISTERS OF AN INTEGRATED CIRCUIT FOR DETECTING TEMPORAL VIOLATIONS

(30) Priorité: 04.12.2015 FR 1561879
(43) Date de publication de la demande: 07.06.2017
(73) Titulaire: COMMISSARIAT À L'ÉNERGIE ATOMIQUE ET AUX ÉNERGIES ALTERNATIVES, 75015 Paris (FR)
(72) Inventeur: MIRO PANADES, Ivan, 38000 Grenoble (FR)
(74) Mandataire: Cabinet Beaumont

(56) Documents cités:
- US-A1- 2009 112 557
- US-A1- 2009 206 904
- US-A1- 2013 300 463
- BEIGNE EDITH ET AL: "A 460 MHz at 397 mV, 2.6 GHz at 1.3 V, 32 bits VLIW DSP Embedding F MAX Tracking", IEEE JOURNAL OF SOLID-STATE CIRCUITS, IEEE SERVICE CENTER, PISCATAWAY, NJ, USA, vol. 50, no. 1, 1 janvier 2015 (2015-01-01), pages 125-136, XP011568778, ISSN: 0018-9200, DOI: 10.1109/JSSC.2014.2369503 [extrait le 2014-12-24]
- YUJI KUNITAKE ET AL: "Possibilities to miss predicting timing errors in canary flip-flops", CIRCUITS AND SYSTEMS (MWSCAS), 2011 IEEE 54TH INTERNATIONAL MIDWEST SYMPOSIUM ON, IEEE, 7 août 2011 (2011-08-07), pages 1-4, XP031941599, DOI: 10.1109/MWSCAS.2011.6026656 ISBN: 978-1-61284-856-3

## Description

### Domaine

La présente description concerne le domaine des procédés de conception de circuits intégrés, et en particulier un procédé pour équiper des registres d'un circuit intégré de circuits de détection pour détecter des violations temporelles et améliorer les performances.

### Art antérieur

Afin d'améliorer les performances des circuits intégrés, il est en général souhaitable que la fréquence d'horloge soit aussi élevée que possible tout en maintenant un fonctionnement correct des circuits. En outre, pour réduire la consommation d'énergie, il est aussi souhaitable que la tension d'alimentation du circuit soit aussi faible que possible tout en maintenant un fonctionnement correct du circuit. Au-delà d'un certain point de fonctionnement correspondant à une limite de fréquence d'horloge et de tension d'alimentation, le circuit ne va plus fonctionner correctement. Il y a toutefois une difficulté technique pour détecter le moment où une limite de fréquence d'horloge/tension d'alimentation a été atteinte.

Un circuit intégré ne va plus maintenir un fonctionnement correct si un ou plusieurs de ses dispositifs synchrones sont soumis à des violations temporelles. Les dispositifs synchrones comprennent des registres, des bascules, des mémoires et des bascules à verrouillage appelées "latch". De tels dispositifs sont en général caractérisés par un temps de pré-établissement t_{S} et un temps de maintien t_{H} qui doivent être respectés afin de garantir la stabilité. Le temps de pré-établissement t_{S} définit une période de temps avant un front d'horloge significatif pendant laquelle les données d'entrée du dispositif synchrone ne doivent pas changer. Le temps de maintien t_{H} définit une période de temps après un front d'horloge significatif pendant laquelle les données d'entrée ne doivent pas changer. Une violation temporelle se produit si le temps de pré-établissement ou le temps de maintien ne sont pas respectés.

Une analyse temporelle statique d'une conception de circuit intégré peut identifier un ou plusieurs chemins de transmission critiques, qui sont les chemins de transmission ayant les délais de propagation les plus longs entre deux dispositifs synchrones dans le circuit. Les délais de propagation sur ces chemins de transmission critiques sont en général utilisés pour déterminer la fréquence d'horloge maximum permise pour le circuit.

Il est toutefois nécessaire de prévoir une marge de sécurité, puisque les temps de propagation de données dans un circuit donné peuvent dériver en conséquence de variations PVT (processus de fabrication, tension, température). La marge de sécurité est basée sur le scénario du pire cas, et un problème est qu'une telle stratégie de conception conduit par conséquent à des performances qui sont loin d'être optimales.

Une publication de Y. Kanitake et al. intitulée "Possibilities to Miss Predicting Timing Errors in Canary Flip-flops", IEEE, Jan. 7, 2011, propose des solutions pour améliorer les performances d'un circuit en incorporant dans un circuit intégré des circuits de détection qui détectent le moment où des violations temporelles se produisent, et en contrôlant le niveau de la tension d'alimentation en conséquence.

Un inconvénient des solutions existantes telles que celle décrite par Kanitake et al. est que, pour être certain d'éviter toute possibilité de violation temporelle dans le circuit, il est nécessaire d'ajouter un circuit de détection à chaque dispositif synchrone du circuit, ce qui conduit à une réduction des performances du circuit et à une augmentation significative du coût et de la surface de silicium.

On a donc besoin dans la technique d'une nouvelle solution pour améliorer les performances d'un circuit tout en réduisant le nombre de circuits de détection.

La publication de Edith Beigné et al. ayant pour titre "A 460 MHz at 397 mV, 2.6 GHz at 1.3 V, 32 bits VLIW DSP Embedding FMAX Tracking", IEEE JOURNAL OF SOLID-STATE CIRCUITS, IEEE SERVICE CENTER, PISCATAWAY, NJ, USA, vol. 50, no.1, 1 janvier 2015, décrit une structure VLIW (Very Long Instruction Word) avec un suivi de F_{MAX}.

### Résumé

Un objet de modes de réalisation de la présente description est de résoudre au moins partiellement un ou plusieurs problèmes de l'art antérieur.

Selon un aspect, on prévoit un procédé de conception de circuit comprenant : réaliser une analyse temporelle statique sur une conception de circuit pour identifier un premier sous-ensemble des dispositifs synchrones ayant au moins un chemin d'entrée ayant un temps de réserve inférieur à un premier seuil ; simuler la conception de circuit en utilisant un ou plusieurs motifs de test fonctionnel pour identifier un deuxième sous-ensemble des dispositifs synchrones pour lequel le nombre d'activations pendant la simulation est supérieur à un deuxième seuil ; sélectionner au moins un dispositif synchrone faisant partie à la fois du premier et du deuxième sous-ensemble ; et modifier la conception du circuit pour inclure, pour chaque dispositif synchrone sélectionné, un circuit de détection couplé à une ou plusieurs entrées du dispositif synchrone sélectionné, chaque circuit de détection étant adapté à fournir un avertissement avancé d'une future violation temporelle potentielle.

Selon un mode de réalisation, le circuit de détection ajouté à chaque dispositif synchrone sélectionné est couplé à au moins une entrée d'horloge et au moins une entrée de données du dispositif synchrone sélectionné.

Selon un mode de réalisation, la simulation est réalisée sur une représentation RTL (niveau transfert de registres) de la conception de circuit.

Selon un mode de réalisation, le procédé comprend en outre, avant ladite simulation, la définition d'un tracé de la conception de circuit en réalisant un placement et un routage, et la détermination par analyse temporelle d'au moins les délais de propagation de certains chemins ou de tous les chemins entre les dispositifs synchrones, le deuxième sous-ensemble de dispositifs synchrones étant constitué de ceux pour lesquels le nombre d'activations pendant la simulation avec un retard de propagation supérieur à un troisième seuil est au-dessus du deuxième seuil.

Selon un mode de réalisation, la sélection comprend la sélection d'une pluralité de dispositifs synchrones faisant partie à la fois du premier et du deuxième sous-ensemble sur la base au moins partiellement de l'emplacement des dispositifs synchrones dans le tracé.

Selon un mode de réalisation, l'analyse temporelle est basée sur des premiers modèles de performances des dispositifs synchrones de la conception de circuit, le procédé comprenant en outre : réaliser une autre analyse temporelle de la conception de circuit pour déterminer les délais de propagation desdits certains ou tous les chemins entre les dispositifs synchrones sur la base de deuxièmes modèles de performances des dispositifs synchrones, les deuxièmes modèles de performances supposant un vieillissement par rapport aux premiers modèles de performances ; et comparer, pour chacun des chemins, le délai de propagation généré par l'analyse temporelle et par l'autre analyse temporelle, le deuxième sous-ensemble de dispositifs synchrones étant constitué de ceux pour lesquels la différence de temps entre les délais de propagation est supérieure à un quatrième seuil.

Selon un mode de réalisation, la simulation de la conception de circuit comprend la génération de code définissant un registre espion adapté à observer, pendant la simulation, une entrée d'horloge et au moins une entrée de données de chaque dispositif synchrone du premier sous-ensemble.

Selon un mode de réalisation, le procédé comprend en outre : déterminer un taux d'activation associé à chaque dispositif synchrone du premier sous-ensemble, le taux d'activation indiquant le nombre de transitions de données reçues par le dispositif synchrone pendant la simulation avec des délais de propagation supérieurs au troisième seuil ; et la sélection d'au moins un dispositif synchrone faisant partie à la fois du premier et du deuxième sous-ensemble comprenant la sélection d'au moins un dispositif synchrone ayant un taux d'activation supérieur à un quatrième seuil.

Selon un mode de réalisation, chacun des chemins entre des dispositifs synchrones de la conception de circuit comprend une ou plusieurs cellules, le procédé comprenant en outre, avant de simuler la conception de circuit, la génération d'un fichier temporel dans le format standard de retards (SDF) indiquant un retard de cellule pour chacune des cellules.

Selon un mode de réalisation, chaque circuit de détection est adapté à activer un signal d'avertissement si un signal de données sur ladite au moins une entrée de données du dispositif synchrone sélectionné présente une transition pendant une fenêtre temporelle de détection, au moins une partie de la fenêtre temporelle de détection couvrant une période temporelle pour laquelle un temps de pré-établissement du dispositif synchrone sélectionné n'est pas violé.

Selon un autre aspect, on prévoit un support de stockage de données mémorisant sur lui des instructions qui, lorsqu'elles sont exécutées par un dispositif de traitement, amènent la mise en oeuvre du procédé susmentionné.

Selon un autre aspect, on prévoit un dispositif de conception de circuit comprenant : une mémoire mémorisant une conception de circuit comprenant des dispositifs synchrones ; et un dispositif de traitement adapté à : réaliser une analyse temporelle statique d'une conception de circuit pour identifier un premier sous-ensemble des dispositifs synchrones ayant au moins un chemin d' entrée ayant un temps de réserve inférieur à un premier seuil ; simuler la conception de circuit en utilisant un ou plusieurs motifs de test fonctionnel pour identifier un deuxième sous-ensemble des dispositifs synchrones pour lequel le nombre d'activations pendant la simulation est supérieur à un deuxième seuil ; sélectionner au moins un dispositif synchrone faisant partie à la fois du premier et du deuxième sous-ensemble ; et modifier la conception de circuit pour inclure, pour chaque dispositif synchrone sélectionné, un circuit de détection couplé à une ou plusieurs entrées du dispositif synchrone sélectionné, chaque circuit de détection étant adapté à fournir un avertissement avancé d'une future violation temporelle potentielle.

### Brève description des dessins

Les caractéristiques et avantages susmentionnés, et d'autres, apparaîtront clairement avec la description détaillée suivante de modes de réalisation, donnés à titre illustratif et non limitatif, en faisant référence aux dessins joints dans lesquels :
la figure 1A illustre schématiquement un circuit de détection du type dit "canary flip-flop" qui a été proposé ;
la figure 1B est un chronogramme illustrant un exemple de signaux dans le circuit de la figure 1A ;
la figure 2A illustre schématiquement un circuit de détection selon un autre exemple de réalisation de la présente description ;
la figure 2B illustre schématiquement le circuit de détection de la figure 2A plus en détail selon un exemple de réalisation ;
la figure 2C est un chronogramme illustrant des signaux dans le circuit de la figure 2B selon un exemple de réalisation ;
la figure 2D est un chronogramme illustrant un exemple de fenêtre de détection selon un exemple de réalisation de la présente description ;
les figures 2E à 2H illustrent des exemples de plages de fenêtre de détection selon un exemple de réalisation ;
les figures 3A à 3C sont des chronogrammes illustrant un exemple d'utilisation du circuit de détection de la figure 1A ou 2A ;
la figure 4 illustre schématiquement un système de contrôle de point de fonctionnement de circuit intégré selon un exemple de réalisation ;
la figure 5 représente un procédé de conception de circuit selon un exemple de réalisation de la présente description ;
la figure 6 illustre schématiquement du matériel pour mettre en oeuvre le procédé de la figure 5 ;
la figure 7 est un organigramme illustrant des étapes dans un procédé de sélection de registres à équiper de circuits de détection selon un exemple de réalisation ;
la figure 8 est un graphique illustrant un exemple de résultats d'une analyse temporelle statique selon un exemple de réalisation ;
la figure 9A représente un procédé de conception de circuit selon un autre exemple de réalisation ;
la figure 9B illustre une opération de simulation de la figure 9A plus en détail selon un exemple de réalisation ;
la figure 10 est un graphique représentant des périodes d'horloge minimum selon un exemple de réalisation de la présente description ;
la figure 11 est un graphique illustrant un exemple de de taux d'activation selon un exemple de réalisation de la présente description ; et
la figure 12 est un graphique illustrant un exemple d'activité de dispositifs synchrones selon un exemple de réalisation de la présente description.

### Description détaillée

Dans la description qui suit, les termes suivants auront les finitions suivantes :
dispositif synchrone - tout dispositif qui fonctionne sur la base d'un signal d'horloge, comme un registre, par exemple une bascule ou une bascule à verrouillage (latch), ou tout autre type de dispositif comme une RAM (mémoire à accès aléatoire), une ROM (mémoire à lecture seule), etc. ; et
point de fonctionnement - combinaison d'une ou plusieurs tensions d'alimentation, d'une ou plusieurs fréquences d'horloge, d'un processus de fabrication et d'une température ;
point de fonctionnement optimal - point de fonctionnement fonctionnel à partir duquel un très faible changement de fréquence et/ou de tension va induire une violation temporelle. De façon générale, un tel point de fonctionnement optimal est théorique et non atteignable en pratique ;
point de fonctionnement cible - point de fonctionnement qui correspond par exemple à une tension d'alimentation et une fréquence d'horloge qui sont toutes les deux dans une plage de 5 pourcent autour du point de fonctionnement optimal. Pour un circuit donné, le point de fonctionnement cible va varier, et est par exemple estimé comme on va le décrire plus en détail ci-après.

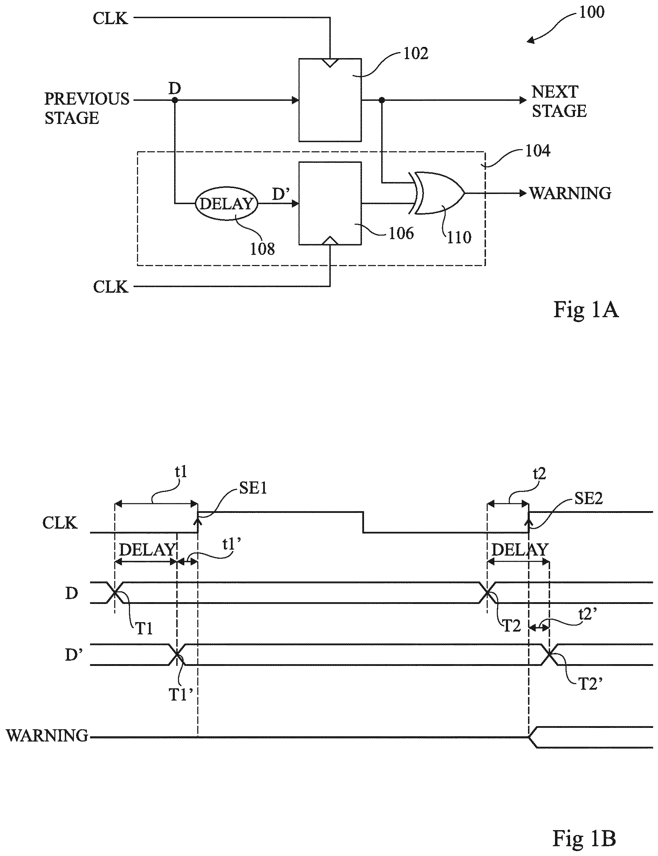

La figure 1A illustre schématiquement un circuit 100 comprenant un dispositif synchrone 102 équipé d'un circuit de détection d'un type appelé "canary flip-flop" 104, sensiblement tel que décrit dans la publication de Y. Kanitake et al. mentionnée précédemment dans la section d'art antérieur.

Le dispositif synchrone 102, qui est par exemple une bascule de type D, comporte une entrée de données couplée à une ligne d'entrée de données recevant un signal de données D provenant d'un étage précédent (PREVIOUS STAGE). Le dispositif synchrone 102 est cadencé par un signal d'horloge CLK reçu sur une ligne d'entrée d'horloge. Une sortie de données du dispositif synchrone 102 est couplée à un étage suivant (NEXT STAGE).

Le circuit de détection 104 comprend par exemple un autre dispositif synchrone 106 ayant une entrée de données couplée à la ligne d'entrée de données par l'intermédiaire d'un élément de retard (DELAY) 108, et reçoit ainsi une version retardée D' du signal de données D. Le dispositif synchrone 106 est par exemple cadencé par le même signal d'horloge CLK que le dispositif 102. Une sortie de données du dispositif synchrone 106 est couplée à une entrée d'un comparateur 110, mis en oeuvre par exemple par une porte OU Exclusif. L'autre entrée du comparateur 110 est couplée à la sortie du dispositif synchrone 102. Le comparateur 110 active un signal d'avertissement (WARNING) sur sa sortie si les signaux présents sur les sorties du dispositif synchrone 102, 106 sont différents entre eux.

Le fonctionnement du circuit de la figure 1A va maintenant être décrit plus en détail en faisant référence au chronogramme de la figure 1B.

La figure 1B illustre des exemples du signal d'horloge CLK, des signaux de données D et D', et du signal d'avertissement WARNING dans le circuit de la figure 1A.

Comme cela est illustré, le signal de données D a par exemple une transition T1 survenant à un temps t1 avant un front d'horloge significatif SE1 du signal d'horloge CLK, qui est dans l'exemple de la figure 1B un front montant. Le temps t1 est supérieur au temps de pré-établissement t_{S} du dispositif synchrone 102. Le signal D' a une transition T1' retardée de la durée de retard (DELAY) par rapport à la transition T1 du signal D et arrive ainsi à un temps t1' avant le front d'horloge significatif SE1 du signal d'horloge CLK. Le temps t1' est supérieur au temps de pré-établissement t_{S} du dispositif synchrone 106. Ainsi, les deux dispositifs synchrones 102 et 106 capturent les signaux de données D et D' après les transitions respectives T1, T1', et le signal d'avertissement reste bas.

Le signal de données D a aussi par exemple une transition T2 survenant un temps t2 avant un front d'horloge significatif suivant SE2 du signal d'horloge CLK. Le temps t2 est supérieur au temps de pré-établissement t_{S} du dispositif synchrone 102. Le signal D' a une transition T2' retardée de la durée de retard (DELAY) par rapport à la transition T2 du signal D, mais dans cet exemple, le temps de transition t2' est négatif (la transition survient après le front SE2) et est inférieur au temps de pré-établissement t_{S} du dispositif synchrone 106. Ainsi, le dispositif synchrone 102 capture le signal de données D juste après la transition T2, et le dispositif synchrone 106 capture le signal de données D' avant la transition T2', ce qui conduit à une différence dans les sorties des dispositifs synchrones 102, 106. Ainsi, le signal d'avertissement est activé peu de temps après le front d'horloge significatif SE2. Le signal d'avertissement est par exemple à un niveau bas lorsqu'il est désactivé et est activé à un niveau haut, ou est à un niveau haut lorsqu'il est désactivé, et est activé à un niveau bas.

Le retard introduit par l'élément de retard 108 est par exemple égal au temps de pré-établissement t_{S} du dispositif synchrone 102, de sorte que le signal d'avertissement est activé à chaque fois qu'il y a une violation du temps de pré-établissement. Dans certains modes de réalisation, le retard est supérieur au temps de pré-établissement t_{S} du dispositif synchrone 102, de sorte qu'il y a une marge entre le moment où le circuit de détection 104 active le signal d'avertissement et le moment où une violation temporelle survient réellement. Ainsi, le circuit de détection 104 peut fournir un avertissement avancé d'une future violation temporelle potentielle si des transitions de données continuent à se rapprocher du front d'horloge. En plus ou à la place, dans le cas où le circuit de détection 104 est couplé à un chemin non critique, la marge peut être sélectionnée de telle sorte que le signal d'avertissement soit activé lorsqu'une violation temporelle est susceptible d'être survenue dans le chemin de transmission critique du circuit.

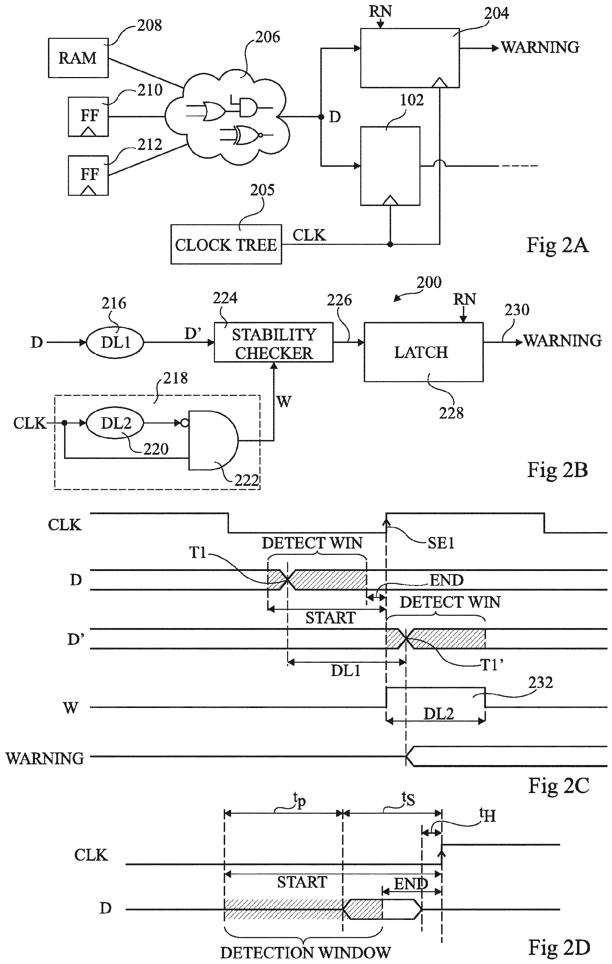

La figure 2A illustre schématiquement un circuit comprenant le dispositif synchrone 102 équipé d'un type de circuit de détection 204 différent par rapport au circuit 104 de la figure 1A. Le circuit de détection 204 fournit un avertissement de violation temporelle potentielle. Comme avec le circuit 104, le circuit de détection 204 reçoit le même signal d'horloge CLK, généré par exemple par un arbre d'horloge (CLOCK TREE) 205, et le même signal de données D que le dispositif synchrone 102 à surveiller. Le circuit de détection 204 reçoit aussi par exemple un signal de réinitialisation RN. En figure 2A, des chemins de propagation vers le registre 102 sont représentés par un nuage 206 comprenant des portes de logique combinatoire. De nombreuses sortes de dispositifs synchrones peuvent fournir la logique combinatoire, et dans l'exemple de la figure 2A, il y a trois chemins de transmission conduisant au dispositif synchrone 102, l'un provenant d'une mémoire à accès aléatoire (RAM) 208, et les deux autres provenant de bascules (FF) 210, 212.

La figure 2B illustre schématiquement le circuit de détection de la figure 2A plus en détail selon un exemple de réalisation.

La ligne d'entrée recevant le signal de données D est par exemple couplée à un élément de retard (DL1) 216, qui génère une version retardée D' du signal de données D. La ligne d'entrée d'horloge est par exemple couplée à un générateur d'impulsions 218, qui génère un signal W comprenant une impulsion d'une certaine durée sur chaque front significatif du signal d'horloge. Par exemple, le générateur d'impulsions 218 comprend un élément de retard (DL2) 220 couplé à la ligne d'entrée d'horloge, et ayant sa sortie couplée par l'intermédiaire d'un inverseur à une entrée d'une porte ET 222. L'autre entrée de la porte ET 222 est par exemple couplée à la ligne d'entrée d'horloge.

La sortie de l'élément de retard 216 et la sortie du générateur d'impulsions 218 sont couplées à un dispositif de vérification de stabilité (STABILITY CHECKER) 224, qui est adapté à activer un signal sur une ligne de sortie 226 si une transition du signal de données D' survient pendant une impulsion du signal W. La ligne de sortie 226 est par exemple couplée à une bascule à verrouillage (LATCH) 228, qui mémorise un état activé du signal sur la ligne 226 jusqu'à ce que le signal de réinitialisation RN soit activé, et active un signal d'avertissement (WARNING) sur une ligne de sortie 230 du verrou. Le signal d'avertissement est par exemple à un niveau bas lorsqu'il est désactivé et est activé à un niveau haut, ou est à un niveau haut lorsqu'il est désactivé, et est activé à un niveau bas. Par exemple, le verrou 228 a son entrée de données couplée à un état haut et reçoit sur son entrée d'horloge la ligne 226 de telle sorte que cet état haut est mémorisé et fourni par le verrou lorsque le signal sur la ligne 226 est activé.

La figure 2C est un chronogramme illustrant le signal d'horloge CLK, les signaux de données D et D', le signal W et le signal d'avertissement WARNING dans le circuit de la figure 2B selon un exemple de réalisation.

Comme cela est illustré, le signal W a une impulsion haute 232 démarrant peu après le front significatif SE1 du signal d'horloge CLK et ayant une durée DL2 égale au retard introduit par l'élément de retard 220 du générateur de l'impulsions 218. L'impulsion haute 232 correspond à une fenêtre de détection (DETECT WIN) appliquée au signal de données D'. Le signal de données D' est retardé par rapport au signal de données D d'une période de temps DL1 introduite par l'élément de retard 216, et ainsi la fenêtre de détection appliquée au signal D' est équivalente à l'application d'une fenêtre de détection au signal de données D commençant à un temps START avant le front montant SE1, et se terminant à un temps END avant le front montant SE1, où START est égal au retard DL1, et END est égal à la différence DL2-DL1 entre les retards DL1 et DL2, qui est par exemple négative si elle arrive avant le front d'horloge.

Dans l'exemple de la figure 2C, le signal de données D a une transition T1 qui survient pendant la fenêtre de détection, et ainsi le signal d'avertissement WARNING est activé peu après la transition correspondante T1' du signal de données D'.

La figure 2D est un chronogramme illustrant un exemple de fenêtre de détection (DETECTION WINDOW) selon un exemple de réalisation.

Le temps START de la fenêtre de détection, correspondant à la durée entre le début de la fenêtre de détection et le front d'horloge significatif, est par exemple égal au temps de pré-établissement t_{S} du dispositif synchrone plus une autre durée tp appelée ici temps de pessimisme. Pendant cette période tp, une transition de données ne provoque pas de violation temporelle dans le dispositif synchrone, mais déclenche le signal d'avertissement, par exemple sous forme d'un avertissement d'une violation temporelle potentielle survenant sur un chemin plus critique dans le circuit. Le point de fonctionnement pour lequel le signal d'avertissement est déclenché correspond par exemple à un point proche du point de fonctionnement optimal du circuit.

Le temps de fin de la fenêtre de détection est par exemple inférieur au temps de maintien du dispositif synchrone. Sinon, si un signal de données arrive en avance sur l'un des chemins, il pourrait être pris par erreur comme une violation de temps de maintien ou de temps de pré-établissement. On notera que dans l'exemple de la figure 2D, le temps de maintien a une valeur négative, ce qui signifie qu'il définit une limite de temps survenant avant le front d'horloge significatif. Le temps de fin est aussi négatif, et puisque le temps de fin est inférieur au temps de maintien, la fin de la fenêtre de détection survient avant la limite de temps définie par le temps de maintien.

La fenêtre de détection a par exemple une durée supérieure au changement minimum dans les positions temporelles respectives du signal d'horloge et du signal de données lorsqu'un changement minimum est appliqué à la fréquence d'horloge ou à la tension d'alimentation du circuit. Par exemple, si la tension d'alimentation du circuit est constante et si on fait varier la fréquence, la fenêtre de détection est par exemple choisie plus longue que le changement minimum de la période d'horloge résultant d'un incrément de la fréquence. En variante, si la fréquence d'horloge est constante et si on fait varier la tension d'alimentation, la fenêtre de détection est par exemple choisie plus longue que l'augmentation de retard dans le signal de données résultant d'un décrément de la tension d'alimentation. En choisissant la longueur de la fenêtre de détection de cette manière, on évite le cas dans lequel un changement appliqué à la fréquence d'horloge ou la tension d'alimentation provoque un changement suffisamment grand dans les caractéristiques temporelle du signal pour faire en sorte que des transitions se déplacent d'un seul coup d'un premier côté de la fenêtre de détection vers l'autre côté, ce qui signifie qu'aucun signal d'avertissement n'est déclenché.

Dans certains modes de réalisation, la fenêtre de détection est variable en fonction du niveau de la tension d'alimentation, comme on va le décrire maintenant en référence aux figures de 2E à 2H.

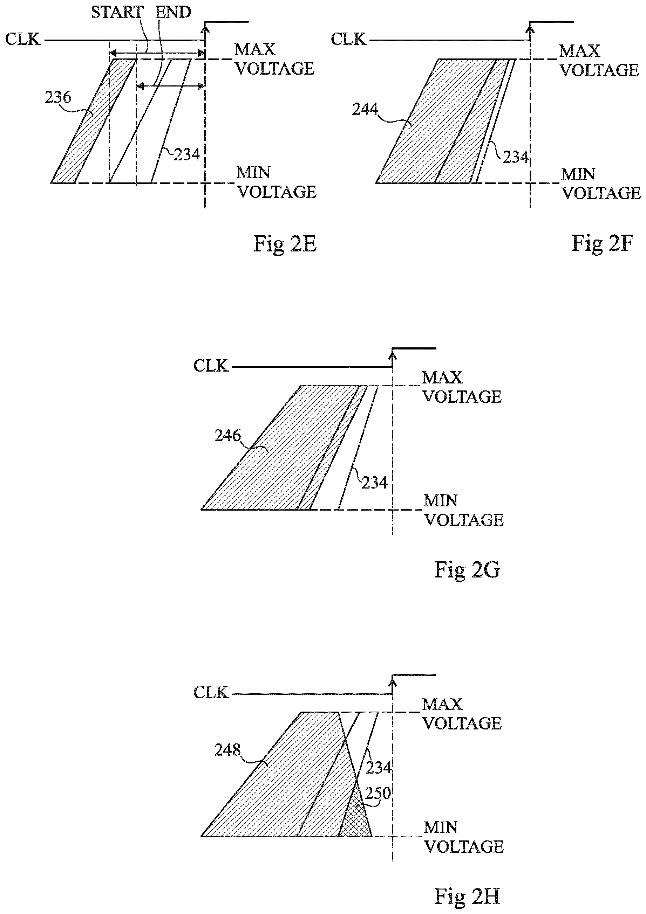

Comme cela est représenté en figure 2E, un quadrilatère 234 représente les variations possibles dans les temps de pré-établissement et de maintien d'un dispositif synchrone pour une tension d'alimentation comprise entre une valeur minimum (MIN VOLTAGE) et une valeur maximum (MAX VOLTAGE). Un quadrilatère hachuré 236 représente la fenêtre de détection, qui varie en fonction de la tension d'alimentation. Par exemple, les éléments de retard DL1 et DL2 de la figure 2B introduisent des retards qui se décalent en conséquence de changements dans le point de fonctionnement. La figure 2E illustre un exemple selon lequel la taille de la fenêtre de détection est au niveau ou proche d'un minimum. Le temps de début et le temps de fin surviennent tous les deux juste en avance sur le temps de pré-établissement du dispositif synchrone dans la plage de tension.

La figure 2F illustre le même quadrilatère 234 qu'en figure 2E, représentant le temps de pré-établissement et le temps de maintien du dispositif synchrone, et un quadrilatère hachuré 244 représente la fenêtre de détection pour la plage de tension comprise entre MIN VOLTAGE et MAX VOLTAGE ayant une taille égale à ou proche d'un maximum. Comme cela est illustré, le temps de début de la fenêtre de détection 244 en figure 2F est par exemple le même quand figure 2E, mais le temps de fin survient juste avant la limite temporelle définie par le temps de maintien sur la plage de tension. Le temps de début reste par exemple à un décalage fixe par rapport au temps de pré-établissement sur la plage de tension du dispositif synchrone.

La figure 2G illustre un autre exemple de fenêtre de détection 246 pour les mêmes temps de pré-établissement et de maintien 234 que pour les figures 2E et 2F. Selon cet exemple, la fenêtre de détection est plus large à des tensions plus basses par rapport à des tensions plus hautes. En d'autres termes, pour des tensions d'alimentation inférieures, le temps de début de la fenêtre de détection a un décalage par rapport au temps de pré-établissement plus grand que pour des tensions d'alimentation supérieures. Cela est avantageux puisqu'il y a une variabilité plus grande à des tensions inférieures, et ainsi un chemin qui n'est pas critique à une tension d'alimentation intermédiaire peut devenir critique à une tension d'alimentation haute. Le temps de fin est par exemple plus en avance que la limite de temps définie par le temps de maintien, et de préférence la longueur de la fenêtre est à un minimum.

La figure 2H illustre encore un autre exemple de la fenêtre de détection 248 selon un mode de réalisation non conseillé dans lequel le temps de fin de la fenêtre de détection survient plus tard que la limite de temps définie par le temps de maintien dans une région 250 à hachures croisées pour une plage de tensions relativement basse. Dans un tel cas le circuit de détection va ajouter des contraintes additionnelles au circuit. Par exemple, dans un tel cas, des chemins de court-circuit ayant des temps de maintien plus critiques doivent être allongés par l'ajout de tampons sur ces chemins. Ainsi, le temps de fin de la fenêtre de détection est par exemple choisi de façon à ne pas être plus mauvais que le temps de maintien d'un registre normal.

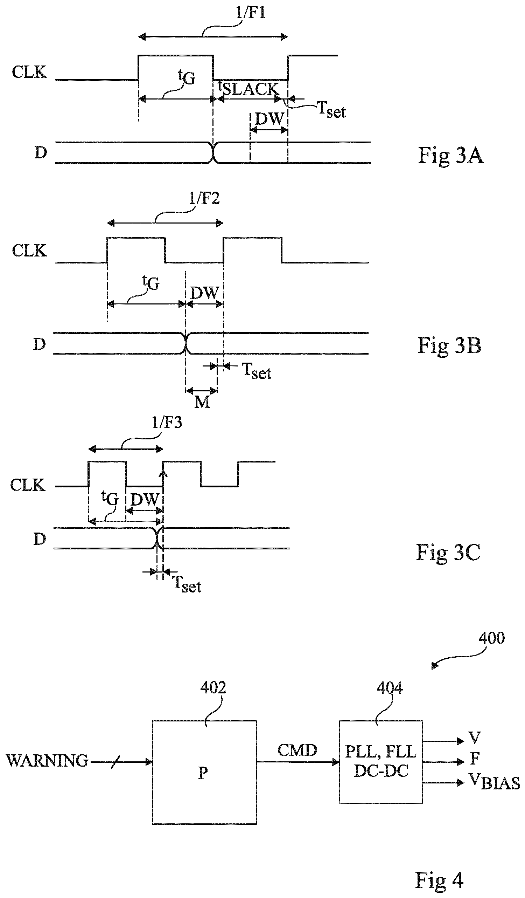

Les figures 3A à 3C sont des chronogrammes illustrant un exemple d'utilisation du circuit de détection 104 ou 204. Dans les exemples illustrés dans ces figures, la fenêtre de détection a un temps de fin sur le front montant du signal d'horloge CLK, mais cela n'est qu'un exemple.

La figure 3A illustre le signal d'horloge CLK ayant une fréquence F1 et le signal de données D sur l'entrée du dispositif synchrone qui est surveillé. Le temps de propagation t_{G} du signal de données D à l'entrée du dispositif synchrone commence à un front montant précédent du signal d'horloge, et se termine dans cet exemple avant la fenêtre de détection, notée DW en figures 3A à 3C. Comme le signal de données n'effectue pas de transition pendant la fenêtre de détection DW, le circuit de détection ne génère aucun signal d'avertissement.

En supposant que le temps de propagation t_{G} corresponde au chemin le plus long jusqu'au registre, un temps de réserve du dispositif synchrone, noté t_{SLACK} en figure 3A, est par exemple défini comme égal à t_{CLK}-t_{G}-Tₛₑₜ, où t_{CLK} est la période d'horloge égale à 1/F1 en figure 3A, et Tₛₑₜ est le temps de pré-établissement du dispositif synchrone. La signification du temps de réserve sera décrite plus en détail ci-après.

La figure 3B illustre un exemple dans lequel le signal d'horloge CLK a une fréquence F2, qui est supérieure à F1. Le signal de données D a une transition au début de la fenêtre de détection DW, et dans ce cas le circuit de détection détecte cette transition, et génère un signal d'avertissement. Cependant, pour le dispositif synchrone qui est surveillé, il n'y a eu aucune violation temporelle puisque la transition ne survient pas pendant le temps de pré-établissement t_{S} du dispositif synchrone. La figure 3B illustre par conséquent un point de fonctionnement non optimal si on ne prend en compte que le fonctionnement du dispositif synchrone surveillé, puisqu'il y a encore une marge de temps M entre la transition de données et le temps de pré-établissement du dispositif synchrone, qui pourrait être réduite. Cependant si le circuit de détection n'est pas associé au chemin de données le plus critique dans le circuit, il est souhaitable de conserver une marge M qui soit au moins égale à la différence de temps de propagation entre le chemin de données le plus critique et le chemin associé au dispositif synchrone qui est surveillé. Le circuit de détection peut ainsi indiquer le moment où il y a un risque de violation temporelle sur le chemin de données le plus critique.

La figure 3C illustre un exemple dans lequel le signal d'horloge CLK a une fréquence F3 supérieure à F1 et à F2, ce qui a pour conséquence que le signal de données fait une transition à la limite de temps définie par le temps de pré-établissement t_{S} du dispositif synchrone. En d'autres termes, la marge M de la figure 3B n'est plus présente, et si la fréquence du signal d'horloge augmente encore, une violation temporelle du temps de pré-établissement va survenir pour le dispositif synchrone qui est surveillé par le circuit de détection. La figure 3C illustre ainsi un point de fonctionnement optimal pour le dispositif synchrone, et la fréquence F3 correspond à la fréquence maximum qui peut être tolérée par le dispositif synchrone au vu de son ou de ses chemins d'entrée associés.

On peut voir à partir des figures 3A à 3C qu'on peut utiliser une fenêtre de détection qui donne un signal d'avertissement à une fréquence d'horloge F2 inférieure à la fréquence maximum F3 du dispositif synchrone.

Ainsi un avantage des circuits de détection décrits en relation avec les figures 1A et 2A est que, en prévoyant un signal d'avertissement avant qu'une violation temporelle ne survienne au niveau de leurs dispositifs synchrones, une violation temporelle survenant dans un chemin plus critique peut être détectée sans équiper le chemin le plus critique d'un circuit de détection. Cela est avantageux puisque les circuits de détection vont ajouter une certaine quantité de capacité aux signaux d'entrée des dispositifs synchrones, réduisant ainsi les performances, ce qui est de préférence évité dans le cas des chemins les plus critiques du circuit. Un autre avantage est qu'il n'est pas nécessaire d'identifier le ou les chemins les plus critiques du circuit, ce qui pourrait être difficile puisque cela dépend du point de fonctionnement courant et des calculs réalisés par le circuit.

La figure 4 illustre schématiquement un système de commande de circuit intégré 400 selon un exemple de réalisation. Comme cela est illustré, un dispositif de traitement 402, qui est par exemple mise en oeuvre par du matériel ou du logiciel, est par exemple couplé à la sortie d'un ou plusieurs circuits de détection (non illustrés en figure 4) qui surveillent des dispositifs synchrones dans le circuit, de sorte que le dispositif de traitement 402 reçoit les signaux d'avertissement (WARNING) provenant des circuits de détection. En réponse à l'activation d'un ou plusieurs signaux d'avertissement, le dispositif de traitement génère par exemple un signal de commande CMD, qui est fourni à un circuit de commande 404, qui par exemple comprend une boucle verrouillée en phase et/ou en fréquence (PLL, FLL) pour contrôler la fréquence F du signal d'horloge et/ou un convertisseur de tension de continu vers continu (DC-DC) pour générer la tension d'alimentation V du circuit. En plus ou à la place, le convertisseur de tension DC-DC peut contrôler une tension de polarisation V_{BIAS} du circuit intégré.

En fonctionnement, selon un mode de réalisation, pour amener le circuit intégré à un point de fonctionnement cible et améliorer ainsi les performances du circuit intégré, une phase d'exploration est par exemple réalisée. Cela implique par exemple soit une réduction de la tension d'alimentation V du circuit par décréments, soit une augmentation de la fréquence d'horloge F du circuit par incréments, jusqu'à ce qu'un ou plusieurs des signaux d'avertissement provenant des circuits de détection soient activés. Pour chaque point de fonctionnement, un motif de test fonctionnel est appliqué au circuit de sorte qu'un ou plusieurs signaux d'avertissement sont activés si le point de fonctionnement cible est atteint ou dépassé. Les valeurs finales de la tension d'alimentation V et de la fréquence F sont ensuite par exemple maintenues ou ramenées aux valeurs qu'elles avaient juste avant l'activation du ou des signaux d'avertissement.

Dans une variante du système de commande de circuit intégré de la figure 4 décrit ci avant, le circuit de détection 104 ou 204 décrit ici pourrait être utilisé dans le procédé et le circuit d'étalonnage décrits dans la demande de brevet français déposée le 7 février 2014 et publiée sous le numéro FR3017466, et dans la demande de brevet PCT déposée au nom de la demanderesse et publiée sous le numéro WO2015/118145, dont le contenu est inclus ici comme référence dans les limites autorisées par la loi. Selon un tel procédé, un premier point de fonctionnement du circuit, éloigné du point de fonctionnement cible, est détecté, par exemple pendant une phase d'exploration impliquant l'application d'un motif de test fonctionnel d'une manière similaire à celle décrite précédemment en référence à la figure 4. Le point de fonctionnement du circuit est alors décalé vers le point de fonctionnement cible, par exemple en augmentant la fréquence d'horloge et/ou en abaissant la tension d'alimentation. Dans certains modes de réalisation, une phase d'étalonnage est utilisée pour définir, pour un circuit donné et dans certain cas pour une température donnée, le changement à appliquer à la fréquence d'horloge et/ou à la tension d'alimentation pour amener le circuit du premier point de fonctionnement jusqu'au point de fonctionnement cible.

Quel que soit le procédé particulier qui est utilisé pour amener le point de fonctionnement du circuit intégré jusqu'au point de fonctionnement cible en utilisant les circuits de détection, les dispositifs synchrones du circuit qui doivent être équipés de circuits de détection doivent être sélectionnés. Comme cela a été indiqué précédemment, les circuits de détection 104 et 204 peuvent avantageusement être utilisés pour équiper des chemins non critiques. Toutefois, en général, il y aura un seul ou seulement quelques chemins critiques dans le circuit qui limitent les performances du circuit, mais l'identification de tels chemins critiques est généralement impossible. En outre, le fait d'équiper tous les chemins non critiques serait extrêmement couteux. On notera aussi que les circuits de détection 104 et 204 utilisent tous les deux des retards afin d'introduire une période de marge/pessimisme. Pour des chemins non critiques ayant des temps de propagation relativement courts, ces retards devraient être grands, entrainant une surface relativement élevée, une disparité élevée des retards et une forte consommation des circuits de détection.

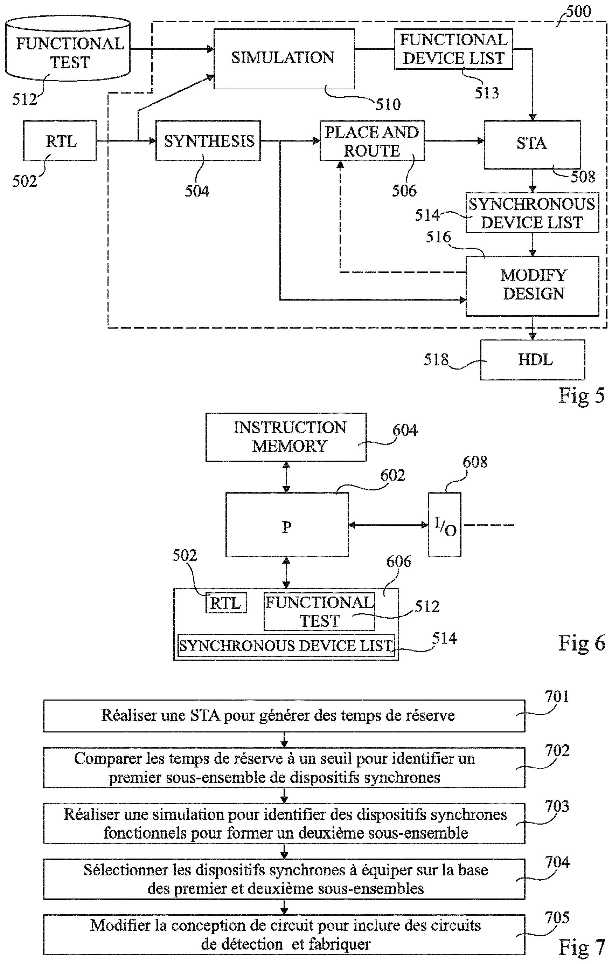

La figure 5 représente un procédé 500 de conception de circuit selon un exemple de réalisation. En particulier, la figure 5 représente un procédé pour sélectionner et équiper, dans une conception de circuit, une pluralité de dispositifs synchrones de circuits de détection.

Le procédé commence par exemple avec un fichier 502 décrivant la conception du circuit, qui est par exemple une description RTL (niveau transfert de registres), ou une description dans un autre langage de haut niveau.

La conception de circuit est par exemple synthétisée, comme cela est représenté par un bloc 504 (SYNTHESIS). Cela implique par exemple de traduire la représentation RTL en une description au niveau portes, par exemple représentée dans un langage de description matérielle comme Verilog ou VHDL (langage de description matérielle de circuits intégrés à très haute vitesse). Bien sûr, dans certains modes de réalisation cette étape de synthèse pourrait être omise si le fichier 502 représente déjà la conception de circuit au niveau portes.

Une conception physique du circuit est ensuite par exemple générée comme cela est représenté par un bloc 506 (PLACE AND ROUTE). Cette opération pourrait aussi être appelée "tentative de routage", et implique par exemple un processus de placement routage pour définir le tracé du circuit au niveau transistors. Ainsi, les longueurs des chemins de transmission dans le circuit sont définies.

Comme cela est représenté par un bloc 508, une analyse temporelle statique (STA) est ensuite par exemple réalisée sur la conception de circuit. Comme cela est connu de l'homme de l'art, une analyse temporelle statique assure une mesure rapide et relativement précise de caractéristiques temporelles d'un circuit, et est par exemple utilisée pour définir le temps de réserve de chaque dispositif synchrone.

Le fichier RTL 502 est aussi par exemple simulé, comme cela est représenté par un bloc 510 en figure 5. La simulation est par exemple basée sur un motif de test fonctionnel (FUNCTIONAL TEST) 512, qui est appliqué aux entrées du circuit. La simulation peut par exemple être utilisée pour générer une liste de dispositifs fonctionnels 513 des dispositifs synchrones du circuit qui sont fonctionnels pendant la simulation, en d'autres termes qui deviennent actifs une ou plusieurs fois pendant la simulation. Cette liste est par exemple fournie au bloc d'analyse temporelle statique 508. Un dispositif synchrone est par exemple considéré comme actif s'il reçoit une transition de données au niveau d'une ou plusieurs entrées de données. Bien sûr, une telle liste de dispositifs synchrones fonctionnels ne reflète que les dispositifs qui sont activés par le motif de test fonctionnel donné. Le motif de test fonctionnel est par exemple choisi de manière à pouvoir être exécuté sur le dispositif final avec le mode fonctionnel du circuit. Par exemple, si le dispositif final est un processeur de téléphone mobile, le motif de test fonctionnel pourrait correspondre à une opération de décodage vidéo. Le motif de test fonctionnel pourrait par exemple être relativement complexe afin d'exciter des chemins critiques du circuit, mais pas nécessairement le chemin le plus critique. Par exemple, dans un processeur, le motif de test fonctionnel est par exemple choisi de telle sorte qu'il excite les unités arithmétiques, qui en général correspondent à des chemins relativement critiques dans le circuit.

La liste de dispositifs synchrones fonctionnels identifiée pendant la simulation est par exemple en outre réduite par l'analyse temporelle statique pour exclure les chemins temporels non critiques. Par exemple, comme on va le décrire plus en détail ci-après, seuls les dispositifs synchrones fonctionnels ayant un temps de réserve inférieur à une certaine valeur sont par exemple sélectionnés. Comme cela est représenté dans la figure 3A décrite précédemment, le temps de réserve t_{SLACK} d'un dispositif synchrone est par exemple défini par t_{CLK}-max(T_{G1}, T_{G2}...T_{GP})-Tₛₑₜ, où t_{CLK} est la période d'horloge, T_{G1} à T_{GP} sont les temps de propagation des chemins de transmission P conduisant au dispositif synchrone, et Tₛₑₜ est le temps de pré-établissement du dispositif synchrone. Pour certains dispositifs synchrones, P peut être égal à seulement 1.

Un avantage de ne pas équiper des dispositifs synchrones qui sont non fonctionnels pendant la simulation est que de tels dispositifs sont aussi vraisemblablement non fonctionnels pendant la phase d'exploration appliquée par le circuit intégré après fabrication, en particulier si le même test ou un test fonctionnel similaire est appliqué. Ainsi il va être rare qu'un circuit de détection couplé à de tels dispositifs synchrones fournisse une indication utile du point de fonctionnement cible du circuit. En outre, en comptant aussi sur l'analyse temporelle statique, seuls des dispositifs synchrones ayant un temps de réserve relativement faible peuvent être équipés. Comme cela a été mentionné précédemment, cela est avantageux puisque lorsque le temps de réserve est élevé, les retards à mettre en oeuvre dans les circuits de détection seront aussi élevés, ce qui conduit à une surface élevée et à une forte consommation d'énergie.

L'analyse temporelle statique et la simulation ont ainsi pour résultat une liste (SYNCHRONOUS DEVICE LIST) 514 de dispositifs synchrones qui à la fois sont fonctionnels pendant les tests fonctionnels et pour lesquels le temps de réserve est inférieur à un seuil.

Comme cela est représenté par un bloc (MODIFY DESIGN) 516, la conception de circuit est ensuite par exemple modifiée pour ajouter des circuits de détection, comme le dispositif 104 de la figure 1A ou le dispositif de 204 de la figure 2A, à certains ou à la totalité des dispositifs synchrones se trouvant sur la liste. Cette modification est par exemple appliquée à la conception de circuit après l'étape d'analyse 504, et fournit ainsi comme résultat une représentation HDL (langage de description matérielle) modifiée 518, qui est par exemple en Verilog ou en VHDL. Comme cela est représenté par une flèche en pointillés, dans certains modes de réalisation la représentation HDL est ensuite traitée de nouveau par les blocs 506 et 508 pour générer une nouvelle liste 514 de dispositifs synchrones, qui peut être modifiée au vu de l'ajout des circuits de détection à la conception de circuit. La mise en oeuvre physique du circuit est par exemple générée dans l'étape 516 ou après l'étape 518, ce qui présente l'avantage de permettre d'utiliser la liste de dispositifs synchrones 514 pendant cette mise en oeuvre.

La figure 6 illustre schématiquement un exemple de matériel pour mettre en oeuvre le procédé 500 de la figure 5. Comme cela est illustré, le matériel comprend par exemple un dispositif de traitement (P) 602, comprenant un ou plusieurs processeurs sous le contrôle d'instructions mémorisées dans une mémoire d'instructions (INSTRUCTION MEMORY) 604, qui permettent la mise en oeuvre du procédé. Le dispositif de traitement 602 est couplé à une autre mémoire 606, qui peut faire partie d'un même dispositif mémoire ou d'un dispositif mémoire différent de celui de la mémoire d'instructions 604. La mémoire 606 mémorise par exemple le fichier RTL (RTL) 502 et le test fonctionnel (FUNCTIONAL TEST) 512 constituant les entrées du procédé 500, et aussi la liste de dispositifs synchrones (SYNCHRONOUS DEVICE LIST) 514 générée par l'étape 508.

La figure 7 est un organigramme illustrant des opérations dans un procédé de sélection de registres à équiper de circuits de détection sur la base du procédé de la figure 5.

Dans une étape 701, une analyse temporelle statique est réalisée sur la conception de circuit pour produire des mesures de temps de réserve pour certains ou pour la totalité des chemins de transmission vers certains ou la totalité des dispositifs synchrones du circuit.

Dans une étape 702, les temps de réserve sont comparés à un seuil afin d'identifier un premier sous-ensemble des dispositifs synchrones.

Dans une étape 703, une simulation est réalisée sur la conception de circuit en appliquant un motif de test fonctionnel pour identifier les dispositifs synchrones qui sont fonctionnels pendant la simulation, les dispositifs identifiés formant un deuxième sous-ensemble.

Dans une étape 704, les dispositifs synchrones à équiper sont sélectionnés sur la base des premier et deuxième sous-ensembles identifiés. Dans certains modes de réalisation, tous les dispositifs synchrones communs entre les premier et deuxième sous-ensembles sont inclus dans une liste de dispositifs à équiper. Dans des variantes de réalisation, on sélectionne seulement un certain nombre des registres couplés aux chemins les plus critiques.

Dans une étape 705, la conception de circuit est par exemple modifiée pour incorporer des circuits de détection pour surveiller les dispositifs synchrones sélectionnés, et un ou plusieurs circuits sont par exemple fabriqués sur la base de la conception de circuit modifiée.

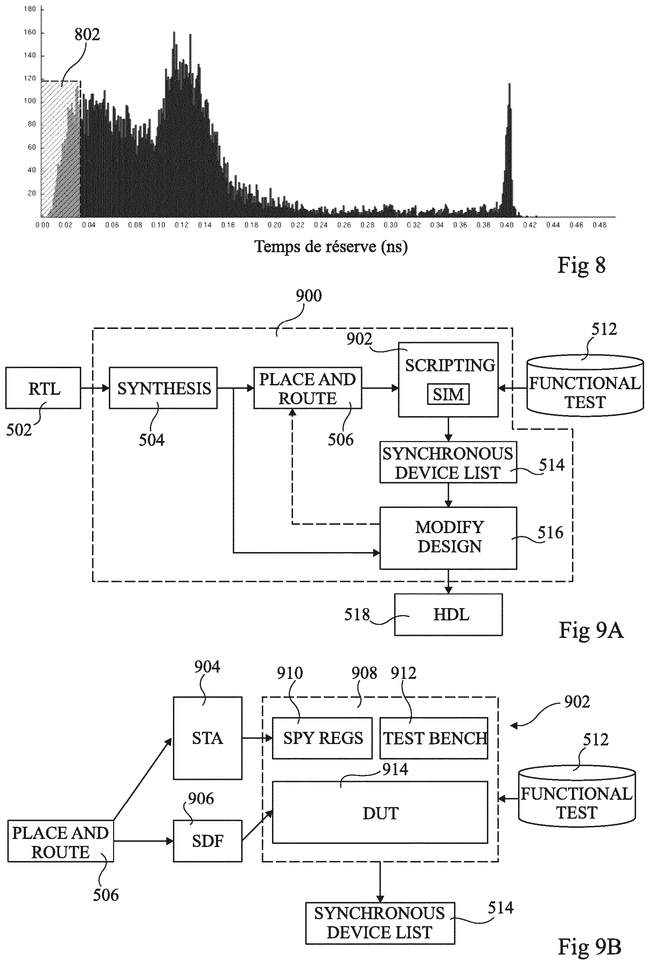

La figure 8 est un graphique de distribution illustrant un exemple de résultats d'une analyse temporelle statique selon un exemple de réalisation. En particulier, le graphique illustre, suivant l'axe des x, le temps de réserve mesuré de chaque chemin de transmission, et suivant l'axe des y, le nombre de dispositifs qui ont le temps de réserve spécifié. Par exemple, il y a 120 registres ou autres dispositifs ayant un temps de réserve de 0,03 ns. Comme cela est représenté par un rectangle hachuré 802, les dispositifs synchrones formant le sous-ensemble sélectionné correspondent par exemple à ceux ayant une entrée de données couplée à l'un des chemins de transmission ayant le temps de réserve le plus faible.

Le procédé de la figure 5, basé sur une analyse temporelle statique et sur une simulation, est capable de sélectionner des dispositifs synchrones qui sont fonctionnels pour un motif de test fonctionnel donné, et qui ont un chemin de transmission conduisant vers eux qui est relativement critique, en d'autres termes qui a un faible temps de réserve. Cependant, il est possible que certains des dispositifs synchrones satisfaisant à ces critères aient aussi un ou plusieurs chemins de transmissions plus courts qui conduisent à eux, et il est possible que ce soient lesdits un ou plusieurs chemins de transmission plus courts qui sont activés pendant la simulation. Dans un tel cas, il n'est pas utile d'équiper de tels dispositifs synchrones. Un procédé qui génère une liste encore plus restrictive d'éléments synchrones à équiper va maintenant être décrit en faisant références aux figures 9 à 12. Ce procédé peut aussi être mis en oeuvre par le matériel illustré en figure 6.

La figure 9A représente un procédé de conception de circuit selon un autre exemple de réalisation. De nombreuses étapes du procédé sont les mêmes que les étapes de la figure 5, et ces étapes portent les mêmes références et ne vont pas être décrites de nouveaux en détail.

Par rapport au procédé 500 de la figure 5, dans le procédé 900 de la figure 9A l'étape de simulation 510 et l'étape STA 508 ont été remplacées par une étape de script 902 réalisée après l'étape de placement routage 506, et qui implique une simulation sur la base du test fonctionnel 512. Toutefois, alors que dans le mode de réalisation de la figure 5 la simulation est basée sur la représentation de circuit RTL, la simulation réalisée dans l'étape 902 est par exemple réalisée sur la base de la représentation au niveau portes de la conception de circuit et est simulée avec toutes les valeurs parasites, comme les résistances, les condensateurs et les inductances. La représentation au niveau portes est par exemple une représentation Verilog ou VHDL couplée à un fichier SDF (fichier de retards de simulation). Comme dans le procédé de la figure 5, l'étape 902 fournit une liste de dispositifs synchrones 514 à équiper avec des circuits de détection dans l'étape 516.

La figure 9B représente l'étape de script et de simulation 902 de la figure 9A plus en détail selon un exemple de réalisation.

La conception de circuit résultant de l'opération de placement routage 506 est par exemple fournie pour une analyse temporelle statique à un bloc 904, comme cela est représenté, et à un bloc 906, qui génère un fichier temporel au format standard de retards (SDF). Ce fichier SDF indique par exemple au moins le délai de propagation de chaque cellule du circuit.

Comme cela est représenté par un bloc en pointillés 908, les résultats de l'étape STA 904, et le fichier SDF, sont par exemple utilisés dans un procédé pour générer la liste 514 de dispositifs synchrones à équiper. En particulier, les résultats STA sont par exemple utilisés dans une étape 910 pour identifier des dispositifs synchrones dans le circuit qui doivent être observés pendant la simulation. Par exemple, un sous-ensemble des dispositifs synchrones du circuit est identifié comme comprenant ceux ayant un temps de réserve inférieur à un seuil donné.

Dans une étape (SPY REGS) 910, un fichier de registre espion est généré comprenant du code pour chaque dispositif synchrone identifié sur la base des résultats STA. Pendant la simulation, dans un environnement de test défini par un banc de test (TEST BENTCH) 912, d'un dispositif en test (DUT) 914, le registre espion permet d'observer les ports d'entrée de chaque dispositif synchrone.

Par exemple, le code dans le fichier de registre espion pour chaque dispositif synchrone est sensiblement le suivant : 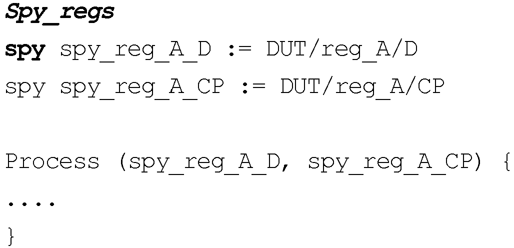 où le dispositif synchrone dans cet exemple est un registre reg_A, et DUT/reg_A/D est le signal d'entrée de données du registre, et DUT/reg_A/CP est le signal d'entrée d'horloge du registre.

Le fichier de registre espion permet d'extraire des signaux d'espionnage qui observent ou espionnent les noeuds de données et d'horloge des dispositifs synchrones. Cela permet d'espionner sur le DUT sans modifier la conception du DUT ni le banc de test.

Le DUT 914 est ensuite simulé en appliquant les motifs de test fonctionnel 512 à ses entrées. Le fichier SDF 906 est utilisé pendant la simulation pour définir les délais de propagation de chaque cellule de la conception de circuit, et ainsi, en utilisant les registres espions, il est possible de déterminer le temps de réserve pour chaque dispositif synchrone. Par exemple, pour chaque dispositif synchrone, le temps de réserve est calculé sur chaque front d'horloge significatif, et le temps de réserve minimum est calculé sur la base du chemin le plus long vers le dispositif synchrone. Pour réaliser cela, une valeur de temps de réserve minimum pour chaque dispositif synchrone est mise à jour sur chaque évènement détecté si la nouvelle valeur est inférieure au temps de réserve minimum mémorisé précédemment. On suppose que la conception de circuit en cours de simulation n'a pas de problèmes temporels, comme des violations de temps de maintien, puisqu'autrement la simulation peut ne pas se terminer avec succès. Pendant la simulation, la fréquence d'horloge est par exemple réglée à une valeur inférieure à la fréquence d'horloge maximum Fmax du circuit pour éviter des problèmes de temps de pré-établissement. On notera que le fait de régler la fréquence d'horloge plus basse que Fmax n'est pas un problème puisque la méthodologie utilise la période d'horloge effective et le temps de réserve du dispositif synchrone pour calculer le délai de propagation le plus long vers chaque dispositif synchrone.

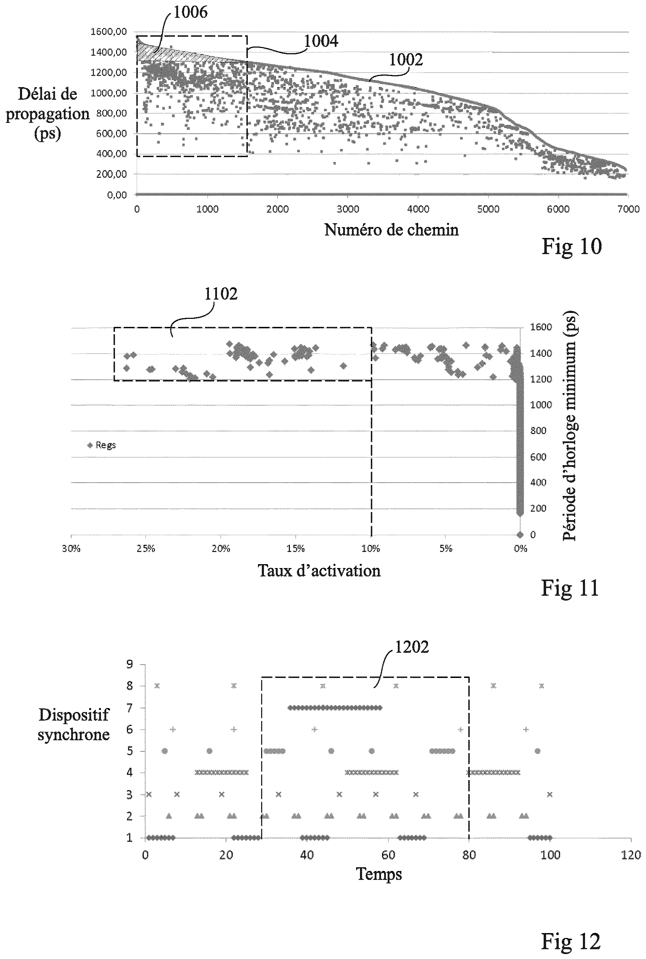

La figure 10 est un graphique représentant des périodes d'horloge minimum calculées sur la base de la simulation réalisée dans l'opération 908 décrite précédemment. L'axe des x du graphique correspond aux numéros des points de terminaison, et dans l'exemple de la figure 10 il y a par exemple 7000 points de terminaison, en d'autres termes 7000 dispositifs synchrones. Les points de terminaison sont classés sur la base du niveau avec lequel ils sont critiques, déterminé sur la base des données STA, les numéros de points de terminaison les plus bas (égaux à ou proche de 0) étant les plus critiques et les numéros de points de terminaison les plus hauts (égaux à ou proche de 7000) étant les moins critiques. L'axe des y représente le délai de propagation le plus long vers chaque point de terminaison en picosecondes. Les points carrés indiquent le délai de propagation le plus long simulé vers chaque point de terminaison pour chaque dispositif synchrone, calculé comme étant égal à la période d'horloge appliquée au DUT moins la valeur minimum du temps de réserve du dispositif synchrone mesurée pendant la simulation. Ainsi, si un dispositif synchrone a le délai de propagation le plus long de 1200 ps, cela signifie que la période d'horloge devrait être égale ou supérieure à 1200 ps afin d'éviter une violation de temps de pré-établissement. Sur le graphique, il y a un point carré par dispositif synchrone, puisque même si le dispositif synchrone est activé plus qu'une seule fois pendant la simulation, seul le délai de propagation le plus long/le temps de réserve le plus faible est enregistré.

Une courbe 1002 représente la période d'horloge minimum pour chaque point de terminaison, calculée sur la base des données STA. La courbe 1002 descend de façon monotone, puisque le dispositif synchrone a été classé sur la base des données STA.

On notera que bien que certains points carrés soient sur la courbe 1002 ou proche de celle-ci, beaucoup d'entre eux sont étalés entre la courbe 1002 et l'axe des x. Cela provient du fait que, alors que les données STA peuvent indiquer qu'un registre est critique en raison du fait qu'il est positionné au niveau du point de terminaison du chemin de transmission critique, pendant la simulation, le dispositif synchrone peut être activé par un autre chemin temporel non critique, plutôt que par celui qui est critique.

Un rectangle en pointillés 1004 en figure 10 représente tous les dispositifs synchrones qui sont fonctionnels pendant la simulation et qui sont couplés à un chemin ayant un temps de réserve STA inférieur à un seuil de, par exemple, 200 ps. Ces registres forment par exemple la liste 514 générée par l'étape 508 de la figure 5. Toutefois, en utilisant les informations concernant le niveau avec lequel sont critiques des chemins effectivement actifs pendant la simulation, seuls les dispositifs synchrones correspondant aux points carrés qui tombent dans le triangle hachuré 1006 sont par exemple sélectionnés pour être équipés de circuits de détection. Ces registres forment par exemple la liste 514 générée par l'étape 908 de la figure 9B. Ce sont les dispositifs synchrones qui sont non seulement sont déterminés comme critiques selon les données STA mais qui ont un chemin critique activé pendant la simulation. Dans l'exemple de la figure 10, le chemin activé le plus critique a le délai de propagation le plus long de 1500 ps, qui définit la fréquence maximum Fmax et ainsi le point de fonctionnement du circuit. Les dispositifs synchrones se trouvant dans le triangle 1006 sont par exemple associés à un délai de propagation compris entre 1450 et 1300 ps. Ainsi, ces dispositifs synchrones ont des temps de réserve compris entre 50 et 200 ps. Les dispositifs synchrones associés aux chemins les plus critiques ne sont pas par exemple équipés pour éviter l'ajout d'autres délais de propagation à ces chemins, ce qui pourrait réduire la Fmax des circuits.

Dans certains modes de réalisation, le fichier de registre espion 910 est adapté a compter le nombre d'évènements, en d'autres termes le nombre de fois, pendant la simulation, où un dispositif synchrone est activé avec un délai de propagation au-dessus d'un certain seuil. Cette information indique la fréquence avec laquelle chaque dispositif synchrone exécute un évènement critique. Dans certains modes de réalisation les registres sélectionnés pour être équipés sont seulement ceux pour lesquels le nombre d'évènements critiques détectés est supérieur à un certain seuil. En effet, plus la fréquence des évènements pour un dispositif synchrone donné est élevée lorsqu'un motif de test fonctionnel est appliqué, plus il est probable que le dispositif synchrone soit aussi activé par un motif de test fonctionnel appliqué au dispositif sur silicium. En effet, dans certains cas le motif de test fonctionnel appliqué sur le silicium pendant une phase d'exploration ne sera pas le même que celui appliqué au DUT pendant la simulation.

En outre, si plusieurs évènements sont détectés pour un dispositif synchrone donné, il est probable que ces évènements proviennent de trajets différents dans le circuit. Si un motif de test fonctionnel excite tous ces chemins, le signal d'avertissement sur la sortie du circuit de détection va être déclenché par le chemin ayant le délai de propagation le plus long. Ainsi, un seul circuit de détection va pouvoir surveiller de multiples chemins critiques.

Dans certains modes de réalisation, le fichier de registre espion 910 pourrait observer un message d'erreur différent pour chaque chemin critique, si un motif fonctionnel pouvait être déterminé pour chacun des chemins critiques excités. Par exemple, un motif fonctionnel différent est prévu pour exciter chaque chemin arrivant à un même dispositif synchrone. Par exemple, un motif simu1 est utilisé pour exciter un premier chemin, et un motif simu2 est utilisé pour exciter un autre chemin. Ainsi, le même dispositif synchrone peut observer une pluralité de chemins arrivant à lui en utilisant des motifs fonctionnels différents.

La figure 11 est un graphique illustrant un exemple de de taux d'activation pour des dispositifs synchrones selon un exemple de réalisation. Dans cet exemple, le délai de propagation minimum pour un évènement à considérer est 1200 ps. Bien sûr, dans des variantes de réalisation, on pourrait utiliser un seuil différent. Le taux d'activation dans la figure 11 indique le pourcentage de fronts d'horloge significatifs pour lesquels un dispositif synchrone est activé par un évènement, lorsque son délai de propagation est supérieur à 1200 ps. Un évènement correspond par exemple à la réception d'une transition de données. Par conséquent, un registre ayant un taux d'activation global élevé mais seulement pour des chemins ayant de faibles délais de propagation inférieurs à 1200 ps, apparaît en figure 11 comme ayant un taux d'activation de 0 pourcent.

Dans l'exemple de la figure 11, comme cela est représenté par un rectangle en pointillés 1102, les dispositifs synchrones sélectionnés correspondent par exemple à ceux ayant un taux d'activation d'au moins 10 pourcent, bien que dans des variantes de réalisation on puisse appliquer un seuil différent.

On notera que les circuits de détection intégrés dans le dispositif fabriqué final seront utilisés pour déterminer la fréquence de fonctionnement cible du circuit. Dans certains cas, la fréquence de fonctionnement cible est déterminée en appliquant un motif de test de fonctionnel au circuit et en utilisant une exploration à chaque fréquence d'horloge pour estimer la fréquence de fonctionnement cible pour une plage de tensions d'alimentation. Par conséquent, dans certains modes de réalisation, la distribution des évènements détectés par les dispositifs synchrones pendant un motif de test fonctionnel donné est utilisée pour identifier des bons candidats à équiper comme on va le décrire maintenant plus en détail en référence à la figure 12.

La figure 12 est un graphique illustrant un exemple de l'activité de quelques-uns des dispositifs synchrones 1 à 9 pendant un motif de test particulier selon un exemple de réalisation. Pour chaque dispositif, une marque correspondante est par exemple représentée dans le graphique à chaque fois que le dispositif est activé avec un retard de propagation supérieur à un certain seuil, par exemple supérieur à 1200 ps. On notera que le dispositif synchrone 2 est un bon candidat pour être équipé, puisqu'il a des évènements survenant à intervalles réguliers dans le motif de test fonctionnel.

En outre, dans certains modes de réalisation, l'activité des dispositifs synchrones pendant le motif de test fonctionnel est utilisée pour réduire la longueur du motif de test fonctionnel qui sera utilisé pendant la phase d'exploration. Par exemple, le motif est réduit en sélectionnant seulement une ou plusieurs sous-portions pendant lesquelles il y a une activité relativement élevée parmi certains dispositifs synchrones à équiper. Par exemple, comme cela est représenté par un rectangle en pointillés 1202, dans l'exemple de la figure 12, on peut sélectionner une période pendant laquelle tous les dispositifs synchrones 1, 2, 3, 4, 5 et 7 ont une activité relativement élevée.

Dans certains modes de réalisation, les procédés décrits en relation avec les figures 5 à 12 pour sélectionner des dispositifs synchrones à équiper sont répétés pour une pluralité de points de fonctionnement du circuit intégré, en d'autres termes pour une pluralité de fréquences d'horloge et de combinaisons PVT (processus de fabrication, tension, température). En effet, les chemins qui sont les plus critiques à un point de fonctionnement donné peuvent ne plus être les chemins les plus critiques à un autre point de fonctionnement. Les dispositifs synchrones à équiper sont par exemple sélectionnés comme étant les dispositifs qui sont identifiés fréquemment dans la liste 514 générée pour chaque point de fonctionnement.

Pour au moins certains dispositifs synchrones, la durée du temps de réserve peut devenir plus courte dans le temps en raison du vieillissement du circuit. Dans certains modes de réalisation, l'opération d'analyse temporelle statique 508 des figures 5 et 9B est réalisée une fois sur la base de modèles de performance initiaux de chaque cellule, de sorte que les temps de réserve de chaque dispositif synchrone correspondent aux temps de réserve initiaux dans le circuit avant le vieillissement. L'analyse temporelle statique est ensuite par exemple répétée sur la base d'une version vieillie du modèle de chaque cellule, qui est par exemple un modèle représentant les performances de la cellule après X années, ou X est par exemple compris 1 et 10. La liste de dispositifs synchrones est par exemple générée de façon à inclure des dispositifs qui ont des chemins d'entrée ayant non seulement un temps de réserve initial relativement faible, mais un temps de réserve qui devient plus mauvais avec l'âge, en d'autres termes dont la durée devient plus courte. Par exemple, on sélectionne des dispositifs synchrones pour lesquels le temps de réserve initial est en dessous d'un premier seuil, et pour lesquels le temps de réserve avec vieillissement est inférieur au premier seuil d'une valeur d'au moins un deuxième seuil. Ainsi, si deux dispositifs synchrones ont le même temps de réserve initial, mais le temps de réserve de l'un des dispositifs vieillit plus mal que celui de l'autre, celui ayant le plus mauvais vieillissement est par exemple sélectionné, puisque cela va fournir une meilleure indication du moment où des violations temporelles peuvent survenir en raison du vieillissement des dispositifs synchrones.

Dans certains modes de réalisation, la sélection des dispositifs synchrones à équiper de circuits de détection est aussi basée sur l'emplacement physique des dispositifs synchrones dans le circuit. En effet, des régions différentes d'un circuit intégré peuvent avoir des variations sur la puce dues à une variabilité locale du processus de fabrication, des chutes de tension locales et des variations locales de température. En effet, certaines régions d'un circuit intégré peuvent devenir plus chaudes que d'autres. Au moins un certain pourcentage des dispositifs synchrones sélectionnés pour être équipés est par exemple reparti de façon régulière sur le circuit intégré. Par exemple, si un circuit intégré comprend quatre sous-circuits principaux, par exemple des processeurs, un certain pourcentage, comme par exemple environ 10 pourcent, des dispositifs synchrones est par exemple sélectionné dans chaque sous-circuit, et un autre pourcentage, comme par exemple environ 10 pourcent, est sélectionné dans le sous-système mémoire. De cette manière, environ 50 pourcent ou plus des dispositifs synchrones sélectionnés sont répartis sur le tracé du circuit intégré, et des variations locales qui peuvent affecter le temps de réserve des dispositifs synchrones peuvent aussi être prises en compte.

Dans certains modes de réalisation, la liste 514 comprend des dispositifs synchrones sélectionnés sur la base d'un, de certains ou de la totalité des éléments suivants :
- les temps de réserve de dispositifs synchrones pour une pluralité de PVT différents et de niveaux de fréquence ;
- l'influence du vieillissement, par exemple les temps de réserve de dispositifs synchrones avec et sans vieillissement dans le circuit ;
- le niveau d'activité du dispositif synchrone ; et
- l'emplacement physique des dispositifs synchrones dans le circuit intégré.

Un avantage des procédés décrits pour sélectionner les dispositifs synchrones à équiper de circuits de détection est que cela permet de sélectionner et d'utiliser des dispositifs ayant des chemins relativement critiques et aussi une activité relativement élevée. Cela conduit à l'avantage que les retards introduits dans les circuits de détection peuvent être relativement faibles, et qu'il suffit de relativement peu de circuits de détection pour fournir suffisamment de messages d'avertissement pour permettre à une phase d'exploration précise de trouver la fréquence de fonctionnement cible du circuit intégré.

Avec la description ainsi faite d'au moins un mode de réalisation illustratif, diverses altérations, modifications et améliorations apparaitront facilement à l'homme de l'art.

Par exemple, bien qu'on ait décrit des modes de réalisation dans lesquels les fronts temporels significatifs du signal d'horloge sont les fronts montants, il serait possible de mettre en oeuvre des circuits dans lesquels les fronts d'horloge significatifs sont les fronts descendants, ou à la fois les fronts montants et les fronts descendants.

En outre, il apparaitra clairement à l'homme de l'art que les circuits de détection des figures 1A et 2A sont simplement des exemples, et qu'on pourrait utiliser d'autres types de circuits de détection qui fournissent des avertissements de violations temporelles avec une marge appropriée.

En outre, il sera clair que pour l'homme l'art que les divers modes de réalisation décrits en relation avec les divers modes de réalisation pourraient être combinés, dans des variantes de réalisation, selon des combinaisons quelconques.

## Revendications

1. Procédé de conception de circuit, comprenant :
réaliser une analyse temporelle statique sur une conception de circuit pour identifier un premier sous-ensemble des dispositifs synchrones (102) ayant au moins un chemin d'entrée ayant un temps de réserve inférieur à un premier seuil ;
simuler la conception de circuit en utilisant un ou plusieurs motifs de test fonctionnel pour identifier un deuxième sous-ensemble (513) des dispositifs synchrones pour lequel le nombre d'activations pendant la simulation est supérieur à un deuxième seuil ;
sélectionner au moins un dispositif synchrone (102) faisant partie à la fois du premier et du deuxième sous-ensemble ; et
modifier la conception du circuit pour inclure, pour chaque dispositif synchrone sélectionné, un circuit de détection (104, 204) couplé à une ou plusieurs entrées du dispositif synchrone sélectionné, chaque circuit de détection étant adapté à fournir un avertissement avancé d'une future violation temporelle potentielle.

2. Procédé selon la revendication 1, dans lequel le circuit de détection (104, 204) ajouté à chaque dispositif synchrone sélectionné est couplé à au moins une entrée d'horloge et au moins une entrée de données du dispositif synchrone sélectionné.

3. Procédé selon la revendication 1 ou 2, dans lequel la simulation est réalisée sur une représentation RTL (niveau transfert de registres) de la conception de circuit.

4. Procédé selon l'une quelconque des revendications 1 à 3, comprenant en outre, avant ladite simulation, la définition d'un tracé de la conception de circuit en réalisant un placement et un routage, et la détermination par analyse temporelle d'au moins les délais de propagation de certains chemins ou de tous les chemins entre les dispositifs synchrones, le deuxième sous-ensemble (513) de dispositifs synchrones étant constitué de ceux pour lesquels le nombre d'activations pendant la simulation avec un retard de propagation supérieur à un troisième seuil est au-dessus du deuxième seuil.

5. Procédé selon la revendication 4, dans lequel la sélection comprend la sélection d'une pluralité de dispositifs synchrones faisant partie à la fois du premier et du deuxième sous-ensemble sur la base au moins partiellement de l'emplacement des dispositifs synchrones dans le tracé.

6. Procédé selon l'une quelconque des revendications 1 à 5, dans lequel l'analyse temporelle est basée sur des premiers modèles de performances des dispositifs synchrones de la conception de circuit, le procédé comprenant en outre :
réaliser une autre analyse temporelle de la conception de circuit pour déterminer les délais de propagation desdits certains ou tous les chemins entre les dispositifs synchrones sur la base de deuxièmes modèles de performances des dispositifs synchrones, les deuxièmes modèles de performances supposant un vieillissement par rapport aux premiers modèles de performances ; et
comparer, pour chacun des chemins, le délai de propagation généré par l'analyse temporelle et par l'autre analyse temporelle, le deuxième sous-ensemble (513) de dispositifs synchrones étant constitué de ceux pour lesquels la différence de temps entre les délais de propagation est supérieure à un quatrième seuil.

7. Procédé selon l'une quelconque des revendications 4 à 6, dans lequel la simulation de la conception de circuit comprend la génération de code définissant un registre espion adapté à observer, pendant la simulation, une entrée d'horloge et au moins une entrée de données de chaque dispositif synchrone du premier sous-ensemble.

8. Procédé selon la revendication 7, comprenant en outre :
déterminer un taux d'activation associé à chaque dispositif synchrone du premier sous-ensemble, le taux d'activation indiquant le nombre de transitions de données reçues par le dispositif synchrone pendant la simulation avec des délais de propagation supérieurs au troisième seuil ; et dans lequel la sélection d'au moins un dispositif synchrone faisant partie à la fois du premier et du deuxième sous-ensemble comprend la sélection d'au moins un dispositif synchrone ayant un taux d'activation supérieur à un quatrième seuil.

9. Procédé selon l'une quelconque des revendications 4 à 8, dans lequel chacun des chemins entre des dispositifs synchrones de la conception de circuit comprend une ou plusieurs cellules, le procédé comprenant en outre, avant de simuler la conception de circuit, la génération d'un fichier temporel dans le format standard de retards (SDF) indiquant un retard de cellule pour chacune des cellules.

10. Procédé selon l'une quelconque des revendications 1 à 9, dans lequel chaque circuit de détection (104, 204) est adapté à activer un signal d'avertissement si un signal de données sur ladite au moins une entrée de données du dispositif synchrone sélectionné présente une transition pendant une fenêtre temporelle de détection, au moins une partie de la fenêtre temporelle de détection couvrant une période temporelle pour laquelle un temps de pré-établissement du dispositif synchrone sélectionné n'est pas violé.

11. Support de stockage de données mémorisant sur lui des instructions qui, lorsqu'elles sont exécutées par un dispositif de traitement, amènent la mise en oeuvre du procédé de l'une quelconque des revendications 1 à 10.

12. Dispositif de conception de circuit, comprenant :
une mémoire (606) mémorisant une conception de circuit comprenant des dispositifs synchrones ; et
un dispositif de traitement (602) adapté à :
réaliser une analyse temporelle statique sur une conception de circuit pour identifier un premier sous-ensemble des dispositifs synchrones ayant au moins un chemin d'entrée ayant un temps de réserve inférieur à un premier seuil ;
simuler la conception de circuit en utilisant un ou plusieurs motifs de test fonctionnel pour identifier un deuxième sous-ensemble (513) des dispositifs synchrones pour lequel le nombre d'activations pendant la simulation est supérieur à un deuxième seuil ;
sélectionner au moins un dispositif synchrone faisant partie à la fois du premier et du deuxième sous-ensemble ; et
modifier la conception de circuit pour inclure, pour chaque dispositif synchrone sélectionné, un circuit de détection (104, 204) couplé à une ou plusieurs entrées du dispositif synchrone sélectionné, chaque circuit de détection étant adapté à fournir un avertissement avancé d'une future violation temporelle potentielle.

## Patentansprüche

1. Schaltungskonzeptionsverfahren, das Folgendes aufweist:
Durchführen einer statischen Zeitanalyse an einem Schaltungsdesign zum Identifizieren einer ersten Teilmenge der synchronen Vorrichtungen (102), die wenigstens einen Eingangspfad mit einer Reservezeit unter einem ersten Schwellenwert aufweisen;
Simulieren des Schaltungsdesigns unter Verwendung eines oder mehrerer funktionaler Testmuster zum Identifizieren einer zweiten Teilmenge (513) der synchronen Vorrichtungen, für die die Anzahl von Aktivierungen während der Simulation über einem zweiten Schwellenwert ist;
Selektieren bzw. Auswählen wenigstens einer synchronen Vorrichtung (102), die sowohl Teil der ersten als auch der zweiten Teilmenge ist; und Modifizieren des Schaltungsdesigns zum Aufweisen für jede ausgewählte synchrone Vorrichtung einer Detektionsschaltung (104, 204), die mit einem oder mehreren Eingängen der ausgewählten synchronen Vorrichtung gekoppelt ist, wobei jede Detektionsschaltung geeignet ist zum Vorsehen einer Vorwarnung einer zukünftigen potentiellen Zeitverletzung.

2. Verfahren nach Anspruch 1, wobei die Detektionsschaltung (104, 204), die zu jeder ausgewählten synchronen Vorrichtung hinzugefügt wird, mit wenigstens einem Takteingang und wenigstens einem Dateneingang der ausgewählten synchronen Vorrichtung gekoppelt ist.

3. Verfahren nach Anspruch 1 oder 2, wobei die Simulation an einer RTL (register transfer level) - Darstellung des Schaltungsdesigns durchgeführt wird.

4. Verfahren nach einem der Ansprüche 1 bis 3, das ferner Folgendes aufweist: vor dem Simulieren, Definieren eines Layouts des Schaltungsdesigns durch Durchführen einer Platzierung und eines Routings und Bestimmen durch Zeitanalyse wenigstens der Laufzeitverzögerungen von einigen oder allen Pfaden zwischen den synchronen Vorrichtungen, wobei die zweite Teilmenge (513) von synchronen Vorrichtungen aus solchen besteht, für die die Anzahl der Aktivierungen während der Simulation mit einer Laufzeitverzögerung von mehr als einem Drittel des Schwellenwertes über dem zweiten Schwellenwert liegt.

5. Verfahren nach Anspruch 4, wobei die Selektion das Auswählen einer Vielzahl von synchronen Vorrichtungen aufweist, die sowohl Teil der ersten als auch der zweiten Teilmenge sind, basierend wenigstens teilweise auf der Lage der synchronen Vorrichtungen in dem Layout.

6. Verfahren nach einem der Ansprüche 1 bis 5, wobei die Zeitanalyse auf ersten Leistungsmodellen der synchronen Vorrichtungen des Schaltungsdesigns basiert, wobei das Verfahren ferner Folgendes aufweist:
Durchführen einer weiteren Zeitanalyse des Schaltungsdesigns zum Bestimmen der Laufzeitverzögerungen von einigen oder allen Pfaden zwischen den synchronen Vorrichtungen basierend auf zweiten Leistungsmodellen der synchronen Vorrichtungen, wobei das zweite Leistungsmodell eine Alterung bezüglich des ersten Leistungsmodells annimmt; und
Vergleichen, für jeden Pfad, der Laufzeitverzögerung, die durch die zeitliche Analyse und durch die weitere zeitliche Analyse erzeugt wird, wobei die zweite Teilmenge (513) der synchronen Vorrichtungen solche sind, für die der Zeitunterschied zwischen der Laufzeitverzögerungen über einen vierten Schwellenwert liegt.

7. Verfahren nach einem der Ansprüche 4 bis 6, wobei die Simulation des Schaltungsdesigns das Erzeugen eines Codes aufweist, der ein Spähregister definiert, das geeignet ist, um während der Simulation eine Takteingabe und wenigstens eine Dateneingabe von jeder synchronen Vorrichtung der ersten Teilmenge zu beobachten.

8. Verfahren nach Anspruch 7, das ferner Folgendes aufweist:
Bestimmen einer Schaltrate, die mit jeder synchronen Vorrichtung der ersten Teilmenge assoziiert ist, wobei die Schaltrate die Anzahl von Datenübergängen anzeigt, die von der synchronen Vorrichtung während der Simulation mit Laufzeitverzögerungen über dem dritten Schwellenwert empfangen werden; und wobei das Auswählen von wenigstens einer synchronen Vorrichtung, die sowohl Teil der ersten als auch der zweiten Teilmenge ist, das Auswählen von wenigstens einer synchronen Vorrichtung aufweist, die eine Schaltrate über einem vierten Schwellenwert besitzt.

9. Verfahren nach einem der Ansprüche 4 bis 8, wobei jeder der Pfade zwischen synchronen Vorrichtungen des Schaltungsdesigns eine oder mehrere Zellen aufweist, wobei das Verfahren ferner vor dem Simulieren des Schaltungsdesigns das Erzeugen einer Standardverzögerungsformat (SDF = standard delay format) - Zeitdatei aufweist, die eine Zellenverzögerung für jede der Zellen anzeigt.

10. Verfahren nach einem der Ansprüche 1 bis 9, wobei jede Detektionsschaltung (104, 204) geeignet ist zum Aktivieren eines Warnsignals, wenn ein Datensignal an dem wenigstens einen Dateneingang der ausgewählten synchronen Vorrichtung während eines Detektionszeitfensters übergeht, wobei wenigstens ein Teil des Detektionszeitfensters eine Zeitspanne abdeckt, für die eine Einrichtezeit der ausgewählten synchronen Vorrichtung nicht übertreten wird.

11. Ein Datenspeichermedium zum darin Speichern von Instruktionen, so dass sie, wenn sie von einer Verarbeitungsvorrichtung ausgeführt werden, die Implementierung des Verfahrens nach einem der Ansprüche 1 bis 10 bewirken.

12. Schaltungskonzeptionsvorrichtung, die Folgendes aufweist:
einen Speicher (606) zum Speicher eines Schaltungsdesigns, der synchrone Vorrichtungen aufweist; und
eine Verarbeitungsvorrichtung (602), die geeignet ist zum:
Durchführen einer statischen Zeitanalyse an einem Schaltungsdesign zum Identifizieren einer ersten Teilmenge der synchronen Vorrichtungen, die wenigstens einen Eingangspfad mit einer Reservezeit unter einem ersten Schwellenwert aufweisen;
Simulieren des Schaltungsdesigns unter Verwendung eines oder mehrerer funktionaler Testmuster zum Identifizieren einer zweiten Teilmenge (513) der synchronen Vorrichtungen, für die die Anzahl von Aktivierungen während der Simulation über einem zweiten Schwellenwert liegt;
Auswählen wenigstens einer synchronen Vorrichtung, die sowohl Teil der ersten als auch der zweiten Teilmenge ist; und
Modifizieren des Schaltungsdesigns zum Aufweisen, für jede ausgewählte synchrone Vorrichtung, einer Detektionsschaltung (104, 204), die mit einem oder mehreren Eingängen der ausgewählten synchronen Vorrichtung gekoppelt ist, wobei jede Detektionsschaltung geeignet ist zum Vorsehen einer Vorwarnung einer zukünftigen potentiellen Zeitverletzung.

## Claims

1. A method of circuit conception comprising:
performing static timing analysis on a circuit design to identify a first subset of the synchronous devices (102) having at least one input path with a slack time below a first threshold;
simulating the circuit design using one or more functional test patterns to identify a second subset (513) of the synchronous devices for which the number of activations during the simulation is above a second threshold;
selecting at least one synchronous device (102) forming part of both of the first and second subsets; and
modifying the circuit design to include, for each selected synchronous device, a detection circuit (104, 204) coupled to one or more inputs of the selected synchronous device, each detection circuit being adapted to provide an advanced warning of a future potential timing violation.

2. The method of claim 1, wherein the detection circuit (104, 204) added to each selected synchronous device is coupled to at least one clock input and at least one data input of the selected synchronous device.

3. The method of claim 1 or 2, wherein the simulation is performed on an RTL (register transfer level) representation of the circuit design.

4. The method of any of claims 1 to 3, further comprising, prior to said simulation, defining a layout of the circuit design by performing placement and routing, and determining by timing analysis at least the propagation delays of some or all paths between the synchronous devices, wherein said second subset (513) of synchronous devices are those for which the number of activations during the simulation with a propagation delay of more than a third threshold is above the second threshold.

5. The method of claim 4, wherein said selection comprises selecting a plurality of synchronous devices forming part of both of the first and second subsets based at least partially on the location of the synchronous devices across said layout.

6. The method of any of claims 1 to 5, wherein said timing analysis is based on first performance models of the synchronous devices of the circuit design, the method further comprising:
performing a further timing analysis of the circuit design to determine the propagation delays of said some or all paths between the synchronous devices based on second performance models of the synchronous devices, the second performance model assuming aging with respect to the first performance model; and
comparing, for each of the paths, the propagation delay generated by the timing analysis and by the further timing analysis, wherein said second subset (513) of synchronous devices are those for which the time difference between said propagation delays is above a fourth threshold.

7. The method of any of claims 4 to 6, wherein simulating the circuit design comprises generating code defining a spy register adapted to observe, during the simulation, a clock input and at least one data input of each synchronous device of the first subset.

8. The method of claim 7, further comprising:
determining a toggle rate associated with each synchronous device of the first subset, the toggle rate indicating the number of data transitions received by the synchronous device during the simulation with propagation delays over the third threshold; and wherein selecting at least one synchronous device forming part of both of the first and second subsets comprises selecting at least one synchronous device having a toggle rate over a fourth threshold.

9. The method of any of claims 4 to 8, wherein each of the paths between synchronous devices of the circuit design comprises one or more cells, the method further comprising, prior to simulating the circuit design, generating a standard delay format (SDF) timing file indicating a cell delay for each of the cells.

10. The method of any of claims 1 to 9, wherein each detection circuit (104, 204) is adapted to activate a warning signal if a data signal on the at least one data input of the selected synchronous device transitions during a detection time window, wherein at least part of the detection time window covers a time period for which a setup-time of the selected synchronous device is not violated.

11. A data storage medium storing thereon instructions that, when executed by a processing device, cause the method of any of claims 1 to 10 to be implemented.

12. A device for circuit conception comprising:
a memory (606) storing a circuit design comprising synchronous devices; and
a processing device (602) adapted to:
perform static timing analysis on a circuit design to identify a first subset of the synchronous devices having at least one input path with a slack time below a first threshold;
simulate the circuit design using one or more functional test patterns to identify a second subset (513) of the synchronous devices for which the number of activations during the simulation is above a second threshold;
select at least one synchronous device forming part of both of the first and second subsets; and
modify the circuit design to include, for each selected synchronous device, a detection circuit (104, 204) coupled to one or more inputs of the selected synchronous device, each detection circuit being adapted to provide an advanced warning of a future potential timing violation.
